(19) Europäisches Patentamt
European Patent Office
Office européen des brevets

(11) **EP 4 299 675 A1**

(12) **EUROPEAN PATENT APPLICATION**
published in accordance with Art. 153(4) EPC

(43) Date of publication:
**03.01.2024 Bulletin 2024/01**

(21) Application number: **21928092.2**

(22) Date of filing: **16.12.2021**

(51) International Patent Classification (IPC):
***C08L 81/02*** *(2006.01)* ***C08K 3/26*** *(2006.01)*
***C08K 5/5415*** *(2006.01)* ***C08K 7/14*** *(2006.01)*
***C08K 9/04*** *(2006.01)* ***C08L 23/00*** *(2006.01)*

(52) Cooperative Patent Classification (CPC):
**C08K 3/26; C08K 5/5415; C08K 7/14; C08K 9/04; C08L 23/00; C08L 81/02**

(86) International application number:
**PCT/JP2021/046422**

(87) International publication number:
**WO 2022/180999 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2021 JP 2021030946**

(71) Applicant: **DIC CORPORATION**
**Itabashi-ku**
**Tokyo 174-8520 (JP)**

(72) Inventors:
- **KURATA, Kunito**
  **Ichihara-shi, Chiba 290-8585 (JP)**
- **KUNISHIGE, Masashi**
  **Ichihara-shi, Chiba 290-8585 (JP)**
- **MATSUMOTO, Nobuyuki**
  **Ichihara-shi, Chiba 290-8585 (JP)**
- **KANDA, Tomomichi**
  **Ichihara-shi, Chiba 290-8585 (JP)**
- **NEGISHI, Hiroaki**
  **Ichihara-shi, Chiba 290-8585 (JP)**

(74) Representative: **Gerauer, Marc Philippé**
**Kraus & Weisert**
**Patentanwälte PartGmbB**
**Thomas-Wimmer-Ring 15**
**80539 München (DE)**

# (54) POLYARYLENE SULFIDE RESIN COMPOSITION, POLYARYLENE SULFIDE RESIN COMPOSITION MANUFACTURING METHOD, MOLDED ARTICLE, AND MOLDED ARTICLE MANUFACTURING METHOD

(57) [Problem] To provide a polyarylene sulfide resin composition excellent in resistance to heat and humidity and moldability without deteriorating physical properties such as mechanical strength.

[Means for Resolution] More specifically, the present invention is characterized by including a polyarylene sulfide resin, glass fibers having been subjected to surface treatment with a sizing agent including an epoxy resin and a polyether resin, and a silane coupling agent having a functional group, in which the total content of the epoxy resin and the polyether resin in the sizing agent is 65% to 100% by mass, and the isothermal crystallization time is 9 seconds or shorter.

EP 4 299 675 A1

## Description

### TECHNICAL FIELD

The present invention relates to a polyarylene sulfide resin composition, a polyarylene sulfide resin composition production method, a molded article, and a molded article production method.

### BACKGROUND ART

Recently, engineering plastics with excellent productivity, moldability, and the like have been developed and widely used as members for electrical and electronic devices, automobiles, and the like as substitutes for metal materials because the engineering plastics are also lightweight. Among them, polyarylene sulfide (hereinafter, sometimes referred to as "PAS") resins typified by polyphenylene sulfide (hereinafter, sometimes referred to as "PPS") resins are excellent in mechanical strength, heat resistance, chemical resistance, molding workability, dimension stability, flame retardance, and the like and thus are used mainly for electrical and electronic members, automobile member materials, and the like.

Then, devices have made more compact and more powerful in recent years especially in automobile industry, and heat generated therefrom goes on increasing. Therefore, the level required for resistance to heat and humidity of members such as on-board cooling members and water-related members increases, and various techniques for improving resistance to heat and humidity have been developed.

As one technique for improving resistance to heat and humidity of PAS resin compositions, a technique of blending an amino group-containing silane coupling agent has been known.

For example, PTL 1 discloses a PAS-based composition including: a PAS resin; glass fibers having been subjected to surface treatment with a sizing agent containing an epoxy resin, a urethane resin, and a silane coupling agent; a silane coupling agent having at least one or more functional groups selected from the group consisting of an amino group and an epoxy group; and a synthetic zeolite.

### CITATION LIST

### PATENT LITERATURE

PTL 1: JP2016-132710A

### SUMMARY OF INVENTION

### TECHNICAL PROBLEM

However, in the technique in PTL 1, although a certain effect of improving resistance to heat and humidity is obtained, there has been a problem of deteriorating moldability (releasability) of the resin composition due to the influence of the sizing agent and the silane coupling agent.

Therefore, a purpose of the present disclosure is to provide a PAS resin composition excellent in resistance to heat and humidity and in moldability without deteriorating physical properties such as mechanical strength and to provide a PAS resin composition production method.

In addition, a purpose of the present disclosure is to provide a molded article excellent in resistance to heat and humidity and in moldability without deteriorating physical properties such as mechanical strength and to provide a molded article production method.

### SOLUTION TO PROBLEM

As a result of intensive studies to solve the above problem, the present inventors have found that by making a PAS resin contain a silane coupling agent and glass fibers having been subjected to surface treatment with a sizing agent and by increasing the total amount of the epoxy resin and the polyether resin in the sizing agent, bonds at the interface between the PAS resin and the glass fibers can be made stronger while maintaining physical properties such as mechanical strength at a high level, thus improving resistance to heat and humidity, and further that since the isothermal crystallization time of the obtained PAS resin is as short as nine seconds or shorter, moldability (releasability) is also excellent.

That is, the present disclosure relates to a polyarylene sulfide resin composition including:

a PAS resin;

glass fibers having been subjected to surface treatment with a sizing agent including an epoxy resin and a polyether resin; and

a silane coupling agent having a functional group, the polyarylene sulfide resin composition characterized in that the total content of the epoxy resin and the polyether resin in the sizing agent is 65% to 100% by mass, and the isothermal crystallization time is nine seconds or shorter.

By virtue of having the above configuration, resistance to heat and humidity and moldability can be improved without deteriorating physical properties such as mechanical strength.

In addition, the present disclosure relates to a PAS resin composition production method, including a step of blending a PAS resin, glass fibers having been subjected to surface treatment with a sizing agent, and a silane coupling agent having a functional group, and melting and kneading the same, the method characterized in that

the sizing agent includes an epoxy resin and a polyether resin, the total content of the epoxy resin and the polyether resin in the sizing agent is 65% to 100% by mass, and

the isothermal crystallization time of the obtained resin composition is 9 seconds or shorter.

By virtue of having the above configuration, a PAS resin composition excellent in resistance to heat and humidity and moldability can be obtained without deteriorating physical properties such as mechanical strength.

A molded article of the present disclosure is obtained by molding the PAS resin composition of the present disclosure.

By virtue of having the above configuration, resistance to heat and humidity and moldability can be achieved without deteriorating physical properties such as mechanical strength.

A molded article production method of the present disclosure is characterized by including a step of melting and molding a PAS resin composition obtained by the PAS resin composition production method of the present disclosure.

By virtue of having the above configuration, a molded article having excellent resistance to heat and humidity and moldability can be obtained without deteriorating physical properties such as mechanical strength.

## ADVANTAGEOUS EFFECTS OF INVENTION

According to the present disclosure, a PAS resin composition excellent in resistance to heat and humidity and moldability without deteriorating physical properties such as mechanical strength and a PAS resin composition production method can be provided.

In addition, according to the present disclosure, a molded article excellent in resistance to heat and humidity and moldability without deteriorating physical properties such as mechanical strength and a molded article production method can be provided.

## DESCRIPTION OF EMBODIMENT

Hereinafter, an embodiment of a PAS resin composition, a PAS resin composition production method, a molded article, and a molded article production method according to the present invention will be illustrated and described.

### <PAS resin composition>

The PAS resin composition according to the present invention includes a PAS resin, grass fibers having been subjected to surface treatment with a sizing agent, and a silane coupling agent having a functional group.

Hereinafter, each component constituting the PAS resin composition in the present embodiment will be described.

### (Polyarylene sulfide resin)

The PAS resin composition according to the present embodiment includes a PAS resin.

The PAS resin has a resin structure including, as a repeating unit, a structure in which an aromatic ring and a sulfur atom are bonded and is specifically a resin including, as a repeating unit, a structural portion represented by general formula (1) below and further including, if needed, a trifunctional structural portion represented by general formula (2) below.

[Chem. 1]

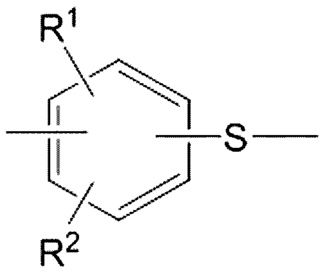

Formula (1)

(In the formula, $R^1$ and $R^2$ each independently represents a hydrogen atom, an alkyl group having 1 to 4 carbon atoms, a nitro group, an amino group, a phenyl group, a methoxy group, or an ethoxy group.)

[Chem. 2]

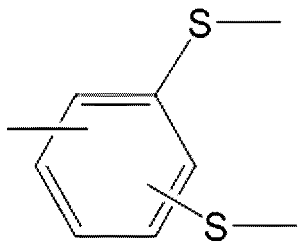

Formula (2)

Incidentally, the trifunctional structural portion represented general formula (2) above is preferably within the range of 0.001 to 3 mol% and especially preferably within the range of 0.01 to 1 mol% based on the total number of moles of the trifunctional structural portion and the other structural portions.

Here, with respect to the structural portion represented by general formula (1) above, $R^1$ and $R^2$ in the formula is especially preferably hydrogen atoms from the point of mechanical strength of the PAS resin, and, in this case, the structural portion represented by general formula (1) includes a structural portion represented by formula (3) below binding in the para position and a structural portion represented by formula (4) below binding in the meta position.

[Chem. 3]

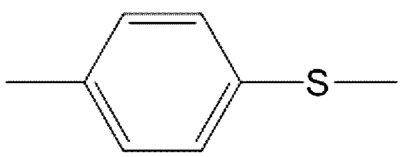

Formula (3)

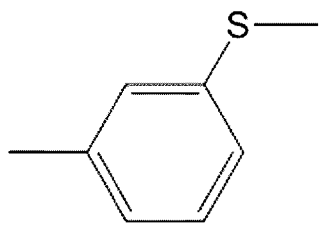

Formula (4)

Among them, a structure in which the sulfur atom binds, at the para position, to the aromatic ring in the repeating unit as represented by general formula (3) above is especially preferable from the aspect of resistance to heat and humidity and crystallizability of the PAS resin.

In addition, the PAS resin may include not only the structural portion represented by general formula (1) or (2) above but also any of structural portions represented by structural formulae (5) to (8) below in an amount of 30 mol % or less based on the total amount of the structural portions represented by structural formulae (5) to (8) and the structural portions represented by general formula (1) and general formula (2) above.

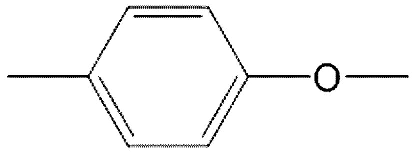

Formula (5)

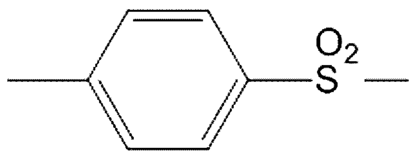

Formula (6)

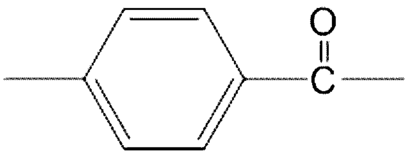

Formula (7)

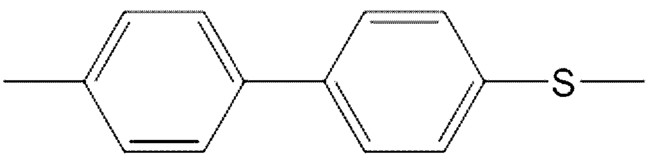

Formula (8)

Furthermore, the structural portions represented by general formulae (5) to (8) above are preferably 10 mol% or less from the viewpoints of resistance to heat and humidity and mechanical strength of the PAS resin. When the structural portions represented by general formulae (5) to (8) above are included in the PAS resin, the binding forms thereof may be any of a random copolymer and a block copolymer.

Although a high molecular weight polymer with a substantially linear structure obtained by polycondensation from monomers which are mainly a bifunctional aromatic halogen compound represented by general formula (1) above can preferably be used for the PAS resin, as described above, a polymer in which a branched structure or a cross-linked structure is partially formed using, in polycondensation, a small amount of monomers such as aromatic polyhalo compound having three or more halogen functional groups represented by general formula (2) can also be used in addition to the PAS resin with a linear structure, and a PAS resin in which molding workability is improved by heating a low molecular weight polymer with a linear structure at a high temperature in the presence of oxygen or an oxidant to increase the melt viscosity through oxidative cross-linking or thermal cross-linking can also be used.

When a PAS resin with a linear structure and a PAS resin with a cross-linked structure are used in combination, the weight ratio therebetween is preferably within the range of linear structure:cross-linked structure = 1:3 to 3:1 form the viewpoint of moldability. This is because the isothermal crystallization time of the obtained PAS resin composition shortens, and good moldability is exhibited in the above-described range.

In addition, the melt viscosity, the non-Newtonian index, and the sodium content of the PAS resin are not particularly limited as long as the effect of the present invention is not impaired, but are as follows.

While the melt viscosity of the PAS resin is not particularly limited, a melt viscosity (V6) measured at 300°C is preferably within the range of 2 Pa s or more, preferably within the range of 1000 Pa s or less, more preferably within the range of 500 Pa s or less, and still more preferably within the range of 200 Pa s or less from the viewpoint of a balance between flowability and mechanical strength.

Incidentally, the measurement of the melt viscosity (V6) is carried out on the PAS resin using flow tester CFT-500D manufactured by SHIMADZU CORPORATION, and a measurement value measured after the PAS resin is held at 300°C and LID = 10(mm)/1(mm) under a load of $1.96 \times 10^6$ Pa for 6 minutes is taken as the melt viscosity.

The non-Newtonian index of the PAS resin is not particularly limited but is preferably within the range of 0.90 or more and 2.00 or less. In addition, when a linear PAS resin is used as the PAS resin, the non-Newtonian index is preferably within the range of 0.90 or more and more preferably within the range of 0.95 or more, and the non-Newtonian index is preferably within the range of 1.50 or less and more preferably within the range of 1.20 or less. PAS resins having such a non-Newtonian index are excellent in mechanical physical properties, flowability, and wear resistance.

Incidentally, in the present embodiment, the non-Newtonian index (N value) is a value calculated using the following equation:

$$SR = K \cdot SS^N$$

(in which, SR represents a shear rate ($second^{-1}$), SS represents shear stress ($dyne/cm^2$), and K represents a constant), with the shear rate (SR) and the shear stress (SS) measured, using Capilograph, under conditions where the melting point is +20°C and the ratio between the orifice length (L) and the orifice diameter (D), L/D, is 40. A non-Newtonian index (N value) closer to 1 indicates that the structure is closer to linear, and a higher non-Newtonian index (N value) indicates that branching in the structure progresses.

In addition, the content of sodium atoms derived from a sulfiding agent or the like in raw material in the PAS resin used in the present embodiment is preferably within the range of 400 ppm or less, more preferably within the range of 350 ppm or less, and especially preferably within the range of 300 ppm or less. It is because the isothermal crystallization time of the obtained PAS resin composition shortens, and good moldability is exhibited in the above-described range. On the other hand, although it is preferable that the lower limit of the sodium concentration be reduced to a detection limit or less, the lower limit of the sodium concentration is preferably 40 ppm or more, and more preferably 50 ppm or more, and especially preferably 70 ppm or more because excessive reduction may decrease productivity.

Incidentally, the sodium atom content included in the PAS resin shall be the concentration (mass basis) of sodium atoms measured with an atomic absorption spectrometer AA-6300 (manufactured by SHIMADZU CORPORATION) when the resin is baked at 500°C, and the ash content obtained after baking at 530°C for 6 hours is then dissolved in hydrochloric acid.

Although a method of producing the PAS resin is not particularly limited, examples thereof include a method (production method 1) in which an aromatic dihalogeno compound is polymerized in the presence of sulfur and sodium carbonate, with an aromatic polyhalogeno compound or another copolymer component added thereto, if needed; a method (production method 2) in which an aromatic dihalogeno compound is polymerized in the presence of sulfiding agent or the like in a polar solvent, with an aromatic polyhalogeno compound or another copolymer component added thereto, if needed; a method (production method 3) in which p-chlorothiophenol is self-condensed, with another copolymer component added thereto, if needed; and a method (production method 4) in which an aromatic diiodo compound and elemental sulfur are melt-polymerized, while reducing pressure, in the presence of a polymerization inhibitor which may have a functional group such as a carboxy group or an amino group.

Among these production methods, a method according to (production method 2) is general-purpose and preferable. An alkali metal salt of carboxylic acid or sulfonic acid or an alkali hydroxide may be added during reaction to adjust the polymerization degree.

Among methods according to (production method 2), those obtained by a method (see JPH07-228699A) in which a PAS resin is produced by introducing a water-containing sulfiding agent to a mixture including a heated organic polar solvent and an aromatic dihalogeno compound at speed allowing water to be removed from a reaction mixture, reacting the aromatic dihalogeno compound and the sulfiding agent in the organic polar solvent, with an aromatic polyhalogeno compound added thereto, if needed, and controlling the water amount within the reaction system to be within the range of 0.02 to 0.5 mol based on 1 mol of the organic polar solvent, and by a method (see WO2010/058713) in which an alkali metal hydrosulfide and an alkali metal salt of an organic acid are reacted with an aromatic dihalogeno compound, with an aromatic polyhalogeno compound or another copolymer component added thereto, if needed, in the presence of a solid alkali metal sulfide and an aprotic polar organic solvent, while controlling the proportion of the alkali metal salt of an organic acid to fall within the range of 0.01 to 0.9 mol based on 1 mol of the sulfur source and the water amount in the reaction system to fall within the range of 0.02 mol or less based on 1 mole of the aprotic polar organic solvent are especially preferable.

Specific examples of the aromatic dihalogeno compound include a p-dihalobenzene, a m-dihalobenzene, an o-dihalobenzene, a 2,5-dihalotoluene, a 1,4-dihalonaphthalene, a 1-methoxy-2,5-dihalobenzene, a 4,4'-dihalobiphenyl, a 3,5-dihalo benzoate, a 2,4-dihalo benzoate, a 2,5-dihalonitrobenzene, a 2,4-dihalonitrobenzene, a 2,4-dihaloanisole, a p,p'-dihalodiphenyl ether, a 4,4'-dihalobenzophenone, a 4,4'-dihalodiphenyl sulfone, a 4,4'-dihalodiphenyl sulfoxide, a 4,4'-dihalodiphenyl sulfide, and a compound in which the aromatic ring of each of the above-described compounds has an alkyl group with 1 to 18 carbon atoms. Specific examples of the polyhalogeno aromatic compound include a 1,2,3-trihalobenzene, a 1,2,4-trihalobenzene, a 1,3,5-trihalobenzene, a 1,2,3,5-tetrahalobenzene, a 1,2,4,5-tetrahalobenzene, and 1,4,6-trihalonaphthalene. Incidentally, halogen atoms included in each of the above-described compounds are desirably a chloride atom or a bromide atom.

In addition, a post treatment method for a reaction mixture including the PAS resin obtained by the polymerization step is also not particularly limited. Examples thereof include a method (post treatment 1) in which the solvent is firstly distilled away, under a reduced pressure or normal pressure, from the reaction mixture directly after completion of polymerization reaction or after adding an acid or a base, and the solid content after solvent distillation is then washed once or twice or more times with a solvent such as water, the reaction solvent (or an organic solvent having an equivalent solubility against a low molecular polymer), acetone, methyl ethyl ketone, an alcohol, or the like, followed by neutralization,

washing with water, filtration, and drying; a method (post treatment 2) in which after completion of polymerization reaction, a solvent (solvent which is soluble in the used polymerization solvent and is a poor solvent at least with respect to PAS) such as water, acetone, methyl ethyl ketone, an alcohol, an ether, a hydrocarbon halide, an aromatic hydrocarbon, or an aliphatic hydrocarbon is added as a precipitation agent to the reaction mixture to precipitate the solid products such as PAS and inorganic salts, and filtrating, washing, and drying the same; a method (post treatment 3) in which after completion of polymerization reaction, the reaction solvent (or an organic solvent having an equivalent solubility against a low molecular polymer) is added to the reaction product, followed by stirring, low molecular weight polymers are then removed through filtration, followed by washing once or twice or more times with a solvent such as water, acetone, methyl ethyl ketone, or an alcohol, and subsequent neutralization, washing with water, filtration, and drying; a method (post treatment 4) in which after completion of polymerization reaction, water is added to the reaction mixture, followed by washing with water, filtration, addition of an acid during washing with water to conduct acid treatment, if needed, and drying; or; a method (post treatment 5) in which after completion of polymerization reaction, the reaction mixture is filtrated, followed by washing with the reaction solvent once or twice or more times, if needed, further washing with water, filtration, and drying.

Incidentally, in the post treatment methods exemplified above as (post treatment 1) to (post treatment 5), drying of the PAS resin may be conducted in a vacuum or may be conducted in an inert gas atmosphere such as air or nitrogen.

(Glass fibers subjected to surface treatment with sizing agent)

The PAS resin composition according to the present embodiment includes, in addition to the above-described PAS resin, glass fibers (hereinafter, sometimes referred to as "surface treated glass fibers") having been subjected to surface treatment with a sizing agent including an epoxy resin and a polyether resin.

Then, the total amount of the epoxy resin and the polyether resin in the sizing agent is required to be 65% to 100% by mass in the present embodiment.

Bonds at the interface between the PAS resin and the glass fibers can be made further stronger by using, as a filler, the glass fibers having subjected to surface treatment with a sizing agent mainly including an epoxy resin and a polyether resin in the PAS resin composition; consequently, mechanical strength and resistance to heat and humidity can be improved. When surface treatment with the sizing agent is not conducted or when components in the sizing agent are different, bonding force at the interface between the PAS resin and the glass fibers described above decreases, and sufficient mechanical strength and resistance to heat and humidity cannot be obtained.

Furthermore, in the PAS resin composition according to the present embodiment, the crystallization time of the resin composition can be shortened by the sizing agent consisting mainly of an epoxy resin and a polyether resin; consequently, the moldability (releasability) can be enhanced.

Here, the shape of the glass fibers to be surface treated is not particularly limited as long as it is a fibrous shape, and the fiber diameter and the fiber length as well as the aspect ratio and the like can be adjusted, as appropriate, according to use of a molded body; however, from the viewpoint of being capable of developing more excellent mechanical strength and toughness, the fiber diameter is preferably within the range of 1 $\mu$m or more and more preferably 6 $\mu$m or more to preferably 50 $\mu$m or less and more preferably 20 $\mu$m or less.

In addition, with respect to types of the glass fibers, those obtained using, as raw material, alkali-containing glass, low-alkali glass, alkali-free glass (E glass), or the like can be used, for example. Among them, alkali-free glass is preferably used since temporal degradation is little, and mechanical properties are stable.

The sizing agent used for surface treatment of the glass fibers contains an epoxy resin and a polyether resin, and the total amount thereof is 65% to 100% by mass. When the total amount thereof is 65% by mass or more, bonds at the interface between the PAS resin and the glass fibers can be made stronger; consequently, mechanical strength and resistance to heat and humidity can be improved. In addition, when the epoxy resin and the polyether resin are used as main components of the sizing agent, the content of a highly volatile component which deteriorates releasability is reduced (or no highly volatile component is contained); consequently, moldability of the resin composition can also be improved. The total content of the epoxy resin and the polyether resin is preferably 65% to 100% by mass, more preferably 75% to 100% by mass, still more preferably 85% to 100% by mass, and especially preferably 95% to 100% by mass.

In addition, although the respective contents of the epoxy resin and the polyether resin in the sizing agent are not particularly limited, it is preferable that the content of the epoxy resin is 55% to 98% by mass, and the content of the polyether resin is 2% to 35% by mass. It is because both mechanical strength and resistance to heat and humidity can be achieved at a higher level when the epoxy resin and the polyether resin are contained within the above-described ranges. From a similar viewpoint, the content of the epoxy resin is preferably 60% by mass or more and more preferably 95% by mass or less. In addition, the content of the polyether resin is more preferably 5% by mass or more and more preferably 30% by mass or less.

The epoxy resin included in the sizing agent is not particularly limited and can be appropriately selected according to performance required. For example, a bisphenol A-type epoxy resin, a bisphenol-type epoxy resin such as bisphenol

A and bisphenol F, a phenol novolac epoxy resin, an ethylphenol novolac epoxy resin, a butylphenol novolac epoxy resin, an octylphenol novolac epoxy resin, a cresol novolac epoxy resin such as an ortho-cresol novolac epoxy resin, a resorcin novolac epoxy resin, a bisphenol A novolac epoxy resin, a bisphenol F novolac epoxy resin, a bisphenol AD novolac epoxy resin, a bisphenol S novolac epoxy resin, and the like can be used, and those in which part of epoxy groups of these resins are opened through reaction with carboxylic acid or the like to form hydroxy groups can be used.

Among them, a phenol novolac epoxy resin having a hydroxy group, a cresol novolac epoxy resin having a hydroxy group, or a bisphenol A-type epoxy resin having a hydroxy group is preferably used as the epoxy resin. It is because mechanical strength of the resin composition can be further improved.

The epoxy equivalent of the epoxy resin is not particularly limited but is preferably 100 to 4000 g/equivalent, more preferably 100 to 1000 g/equivalent, still more preferably 100 to 750 g/equivalent, and especially preferably 100 to 500 g/equivalent.

The polyether resin included in the sizing agent is also not particularly limited and can be appropriately selected according to performance required.

Examples of the polyether resin include polyoxyethylene glycol, polyoxypropylene glycol, polyoxyethyleneoxypropylene glycol, polyoxytetramethylene glycol, and an alkyleneoxide adduct having 2 to 4 carbon atoms of a bisphenol. Among them, those having an oxyalkylene group having 3 to 5 carbon atoms are preferable, and polypropylene glycol, polyoxyethyleneoxypropylene glycol, and polyoxytetramethylene glycol are preferably used.

Incidentally, it is also possible to contain a small amount of another sizing agent component, if needed, as long as the sizing agent contains an epoxy resin and a polyether resin, and the total amount thereof is within the range of 65% to 100% by mass.

Although another sizing agent component described above is not particularly limited, examples thereof include at least one polymer selected from the group consisting of a silane compound, a titanate compound, an acrylic resin, a urethane resin, and the like having a functional group such as an amino group, an epoxy group, an isocyanate group, or a vinyl group.

In addition, the content of the surface treated glass fibers in the PAS resin composition according to the present embodiment is not particularly limited but is preferably 10 parts by mass or more, more preferably 20 parts by mass or more, still more preferably 30 parts by mass or more, and especially preferably 40 parts by mass or more based on 100 parts by mass of the PAS resin, from the viewpoint of obtaining more excellent mechanical strength and resistance to heat and humidity. Furthermore, the content of the surface treated glass fibers in the PAS resin composition according to the present embodiment is preferably 150 parts by mass or less, more preferably 130 parts by mass or less, and still more preferably 110 parts by mass or less based on 100 parts by mass of the PAS resin, from the viewpoint of obtaining more excellent flowability and workability of the resin composition and smoothness of a molded article surface.

Silane coupling agent

The PAS resin composition according to the present embodiment further includes a silane coupling agent having a functional group in addition to the PAS resin and the surface treated glass fibers described above and an inorganic filler as an optional component.

When the silane coupling agent having a functional group is included in the PAS resin composition, adhesive force between the PAS resin and the surface treated glass fibers can be enhanced; consequently, more excellent resistance to heat and humidity and mechanical strength can be obtained.

Here, although the silane coupling agent having a functional group is not particularly limited as long as the effect of the present invention is not impaired, a silane coupling agent having a functional group reactive with a carboxy group such as an epoxy group, an isocyanato group, an amino group, or a hydroxy group is exemplified as a preferable silane coupling agent. Examples of such a silane coupling agent include epoxy group-containing alkoxysilane compounds such as γ-glycidoxypropyltrimethoxysilane, γ-glycidoxypropyltriethoxysilane, and β-(3,4-epoxycyclohexyl)ethyltrimethoxysilane; isocyanato group-containing alkoxysilane compounds such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane; amino group-containing alkoxysilane compounds such as γ-(2-aminoethyl)aminopropylmethyldimethoxysilane, γ-(2-aminoethyl)aminopropyltrimethoxysilane, and γ-aminopropyltnmethoxysilane; and hydroxy group-containing alkoxysilane compounds such as γ-hydroxypropyltrimethoxysilane and γ-hydroxypropyltriethoxysilane.

In addition, the content of the silane coupling agent having a functional group in the PAS resin composition according to the present embodiment is not particularly limited but is preferably 0.3 parts by mass or more, more preferably 0.4 parts by mass or more, and still more preferably 0.5 parts by mass or more based on 100 parts by mass of the PAS resin, from the viewpoint of obtaining more excellent resistance to heat and humidity and mechanical strength.

Meanwhile, the content of the reinforcing fibers in the PAS resin composition according to the present embodiment is more preferably 10 parts by mass or less, still more preferably 8 parts by mass or less, and especially preferably

6 parts by mass or less based on 100 parts by mass of the PAS resin, from the viewpoint of ensuring more excellent flowability and workability of the resin composition.

Elastomer

The PAS resin composition according to the present embodiment may further include an elastomer in addition to the PAS resin and the surface treated glass fibers described above.

Toughness and thermal shock resistance of the PAS resin composition can be further enhanced by further including the elastomer. It is preferable that a thermoplastic elastomer is used as the elastomer from a similar viewpoint.

The thermoplastic elastomer includes a polyolefin-based elastomer, a fluorine-based elastomer, or a silicone-based elastomer, and the polyolefin-based elastomer is exemplified as a preferable elastomer among them. When these elastomers are added, the blending amount thereof is not particularly limited but is preferably 0.01 parts by mass or more, more preferably 0.1 parts by mass or more, and still more preferably 1 part by mass or more based on 100 parts by mass of the PAS resin. Meanwhile, the blending amount of the thermoplastic elastomer is preferably 30 parts by mass or less, more preferably 20 parts by mass or less, and still more preferably 15 parts by mass or less. The above-described ranges are preferable since flexibility of the PAS resin composition obtained is improved within the ranges.

Examples of the polyolefin-based elastomer include an α-olefin homopolymer, a copolymer of two or more α-olefins, and a copolymer of one or two or more α-olefins and a vinyl polymerizable compound having a functional group. At this time, the α-olefins include α-olefins having 2 or more and 8 or less carbon atoms, such as ethylene, propylene, and 1-butene. In addition, the functional group includes a carboxy group, an acid anhydride group (-C(=O)OC(=O)-), an epoxy group, an amino group, a hydroxy group, a mercapto group, an isocyanate group, and an oxazoline group. Then, the vinyl polymerizable compound having a functional group includes one kind or two or more kinds of vinyl acetate; α,β-unsaturated carboxylic acids such as (meth)acrylic acid; alkyl esters of an α,β-unsaturated carboxylic acid such as methyl acrylate, ethyl acrylate, and butyl acrylate; metal salts of an α,β-unsaturated carboxylic acid such as an ionomer (the metal includes alkali metals such as sodium, alkaline earth metals such as calcium, zinc, etc.); glycidyl esters and the like of an α,β-unsaturated carboxylic acid such as glycidyl methacrylate; α,β-unsaturated dicarboxylic acids such as maleic acid, fumaric acid, and itaconic acid; and derivatives (monoesters, diesters, acid anhydrides) of the α,β-unsaturated carboxylic acids. The above-described thermoplastic elastomer may be used singly, or two or more kinds thereof may be used in combination.

Other inorganic fillers

The PAS resin composition according to the present embodiment may further include an inorganic filler in addition to the PAS resin and the surface treated glass fibers described above.

Mechanical strength and thermal conductivity of the PAS resin composition can be further enhanced by further including the inorganic filler.

Here, the kind of the inorganic filler is not particularly limited. Provided that the glass fibers described above are excluded.

Known conventional materials can also be used as the inorganic filler as these other fillers as long as the effect of the present invention is not impaired, and examples thereof include fillers with various shapes such as a particle shape and a plate shape. For example, fibrous fillers such as carbon fibers, silane glass fibers, ceramic fibers, aramid fibers, metal fibers, fibers such as potassium titanate, silicon carbide, calcium silicate and wollastonite, and natural fibers can be used, and non-fibrous fillers such as glass beads, glass flakes, barium sulfate, clay, pyrophyllite, bentonite, sericite, mica, mica, talc, attapulgite, ferrite, calcium silicate, calcium carbonate, magnesium carbonate, glass beads, zeolite, milled fibers, and calcium sulfate can also be used.

Incidentally, these inorganic fillers can also be subjected to surface treatment and can be subjected to an epoxy-based compound, an isocyanate-based compound, a silane-based compound, a titanate-based compound, borane treatment, ceramic coating, and the like, if needed.

In addition, among the inorganic fillers described above, calcium carbonate is preferably used as the inorganic filler from the viewpoint of achieving both mechanical characteristics and dimension stability of the PAS resin composition in a balanced way.

In addition, the content of the inorganic filler in the PAS resin composition according to the present embodiment is not particularly limited but is preferably 5 parts by mass or more, more preferably 10 parts by mass or more, and still more preferably 20 parts by mass or more based on 100 parts by mass of the PAS resin from the viewpoint of more excellent mechanical characteristics and dimension stability.

Furthermore, the content of the inorganic filler in the PAS resin composition according to the present embodiment is more preferably 350 parts by mass or less, still more preferably 300 parts by mass or less, and especially preferably 250 parts by mass or less based on 100 parts by mass of the PAS resin from the viewpoint of obtaining more excellent

flowability and workability of the resin composition and smoothness of a molded article surface.

The total content of inorganic fillers (hereinafter, sometimes referred to as a "total inorganic filler") including the surface treated glass fibers and the inorganic filler in the PAS resin composition according to the present embodiment is not particularly limited. For example, the content is preferably 20 parts by mass or more, more preferably 25 parts by mass or more, and still more preferably 30 parts by mass or more based on 100 parts by mass of the total amount of the PAS resin and the total inorganic filler, from the viewpoint of excellent isothermal crystallization speed of the resin composition. This is because the isothermal crystallization time is shortened, and good moldability is exhibited in the above-described ranges.

Other components

The PAS resin composition according to the present embodiment may include additives (hereinafter, referred to as "other components") such as a synthetic resin other than the PAS resin, a coloring agent, an antistatic agent, an antioxidant, a heat resistance stabilizing agent, an ultraviolet stabilizing agent, an ultraviolet absorber, a foaming agent, a flame retardant, an auxiliary flame retardant, an antirust agent, and a coupling agent according to performance required, in addition to the PAS resin, the surface treated glass fibers, the silane coupling agent, and the optional components of the elastomer and the inorganic filler described above. For example, the other components may be appropriately adjusted preferably within the range of 0.01 parts by mass or more and preferably within the range of 1000 parts by mass or less based on 100 parts by mass of the PAS resin according to the purpose and use so as not to impair the effect of the present invention and used.

Examples of the synthetic resin include synthetic resins such as a polyester resin, a polyamide resin, a polyimide resin, a polyetherimide resin, a polycarbonate resin, a polyphenylene ether resin, a polysulfone resin a polyethersulfone resin, a polyether ether ketone resin, a polyether ketone resin, a polyarylene resin, a polyethylene resin, a polypropylene resin, a polytetrafluoroethylene resin, a polyvinylidene difluoride resin, a polystyrene resin, an ABS resin, a phenol resin, a urethane resin, and a liquid crystal resin.

The synthetic resin is not an essential component, and the blending proportion thereof is not particularly limited as long as the effect of the present invention is not impaired and can be appropriately selected according to each purpose. For example, the blending proportion in the PAS resin composition according to the present invention can be approximately within the range of 5 parts by mass or more and within the range of 15 parts by mass or less based on 100 parts by mass of the PAS resin. In other words, the proportion of the PAS resin based on the total of the PAS resin and the synthetic resin is preferably within the range of (100/115) or more and more preferably within the range of (100/105) or more on a mass basis.

Then, the isothermal crystallization time of the PAS resin composition according to the present embodiment is 9 seconds or shorter.

As the isothermal crystallization time of the PAS resin composition is as short as 9 seconds or shorter, moldability (in particular, releasability) of the resin composition can be improved. From a similar viewpoint, the isothermal crystallization time is preferably 8 seconds or shorter and more preferably 7 seconds or shorter. On the other hand, the isothermal crystallization time is preferably 3 seconds or longer since a problem such as decrease in flowability during molding arises when the isothermal crystallization time is too short.

Incidentally, the isothermal crystallization time is a time (peak top time) until an exothermic peak derived from crystallization of resin appears when, using "Flash DSC1" manufactured by METTLER TOLEDO, the temperature is increased from 30°C to 330°C at a temperature increase rate of 100°C/second, kept at 330°C for one second, then decreased to 140°C at 6000°C/second (maximum cooling temperature decrease rate of the device), and held isothermally.

Polyarylene sulfide resin composition production method

Next, the PAS resin composition production method will be described.

The PAS resin composition production method according to the present embodiment is a production method including a step of blending a PAS resin, glass fibers having been subjected to surface treatment with a sizing agent, and a silane coupling agent having a functional group, and melting and kneading the same, the method characterized in that the sizing agent includes an epoxy resin and a polyether resin, the total content of the epoxy resin and the polyether resin in the sizing agent is 65% to 100% by mass, and the isothermal crystallization time of the obtained resin composition is 9 seconds or shorter.

Each essential component and, if needed, each optional component is blended in the PAS resin composition of the present embodiment. Incidentally, the essential components and the optional components are same as those described above for the PAS resin composition according to the present embodiment.

The method of blending and kneading the essential components and the optional components is not particularly limited but includes a method of mixing essential components and, if needed, an optional component and melting and

kneading the same, more specifically, a method of uniformly mixing, in a dry manner, components using, if needed, a tumbling barrel, a Henschel mixer, or the like, subsequently putting the same into a twin screw extruder, and melting and kneading the same.

Melting and kneading can be conducted through heating within the temperature range in which the resin temperature reaches the melting point of the PAS resin or higher, preferably within the temperature range in which the resin temperature reaches 10°C above the melting point, and more preferably to a temperature within the range of 10°C above the melting point or more, still more preferably 20°C above the melting point or higher and preferably 100°C above the melting point or lower, more preferably 50°C above the melting point or lower.

The melt kneader is preferably a twin screw kneading and extruding machine from the viewpoint of dispersibility and productivity, it is preferable that melting and kneading be conducted while appropriately adjusting the discharge amount of the resin component within the range of 5 to 500 (kg/hr) and the screw rotational speed within the range of 50 to 500 (rpm), and it is more preferable that melting and kneading be conducted under the condition in which the ratio (discharge amount/screw rotational speed) therebetween is within the rage of 0.02 to 5 (kg/hr/rpm).

In addition, addition of each component to the melting and kneading machine and mixing may be simultaneously conducted or may be separately conducted. For example, when an additive is added among the above-described components, the additive is preferably put into the extruder from a side feeder of the twin screw kneading and extruding machine from the viewpoint of dispersibility. With respect to the location of the side feeder, the ratio, to the entire length of the screw of the twin screw kneading and extruding machine, of the distance from the resin input part (top feeder) of the extruder to the side feeder is preferably 0.1 or more and more preferably 0.3 or more. In addition, the ratio is preferably 0.9 or less and more preferably 0.7 or less.

The PAS resin composition according to the present embodiment obtained by melting and kneading in such a manner has a morphology in which the PAS resin forms a continuous phase, and the other essential components and optional components are dispersed. It is preferable that, after melting and kneading, the PAS resin composition according to the present embodiment is processed, using a known method, into a form of a pellet, a chip, granules, powder, or the like after the resin composition in a melted state is extruded and molded into a strand shape, for example, and then subjected to a preliminarily drying, if needed, within the temperature range of 100°C to 150°C.

Molded article, molded article producing method

A molded article according to the present embodiment is formed by melting and molding the PAS resin composition according to the present embodiment described above. In addition, a molded article production method according to the present embodiment is characterized by having a step of melting and molding a PAS resin composition obtained by the above-described PAS resin composition production method according to the present embodiment.

Since the molded article according to the present embodiment uses the PAS resin composition according to the present embodiment as a material, the effect of achieving excellent resistance to heat and humidity and moldability while maintaining physical properties such as mechanical strength at a high level is provided.

Molding of the PAS resin composition can be subject to various types of molding such as injection molding, compression molding, extrusion molding into a composite, a sheet, a pipe, or the like, pultrusion molding, blow molding, and transfer molding, but is suitable for injection molding application because releasability is especially excellent. When the PAS resin composition is molded by injection molding, various molding conditions are not particularly limited, and molding can be usually carried out in a common method. For example, molding may be carried out, after a step of melting the PAS resin composition within a temperature range in which the resin temperature reaches the melting point of the PAS resin or higher, preferably within the temperature range in which the resin temperature reaches 10°C above or higher the melting point, more preferably within the temperature range of 10°C above the melting point to 100°C above the melting point, still more preferably within the temperature range of 20°C above the melting point to 50°C above the melting point, by injecting the melted PAS resin composition from a resin discharge port into a die, in an injection molding machine. At that time, the temperature of the die may also be set within a known temperature range, for example, room temperature (about 23°C) to 300°C, preferably 120°C to 180°C.

Although application of the molded article according to the present embodiment is not particularly limited, and the molded article can be used as various products, the molded article is preferable for members for transferring fluid, such as toilet-related members, oil feeder-related members, pump-related members, bath-related members, and automobile-related members, which are members brought into contact with fluid and steam thereof, because resistance to heat and humidity is especially excellent. In addition, the molded article according to the present embodiment is preferably used as water-related members in which fluid is, for example, an aqueous medium including water and an organic solvent miscible in water such as ethylene glycol, and can be used as a composite molded article joined with a metal, a molded article of the PAS resin composition of the preset invention alone, and the like. Insert injection molding, vibration welding, infrared welding, ultrasonic welding, electromagnetic induction heating, and a joining method combining these methods can be used as a method for joining the molded article with a metal, for example.

Incidentally, products using the molded article and the composite molded article according to the present embodiment are not limited to the above-described products, and may be common resin molded articles as described below. Examples thereof include electrical and electronic members typified by protection and support members, multiple individual semiconductors or modules for a box-shaped electrical and electronic part integrated module, sensors, LED lamps, connectors, sockets, resistors, relay cases, switches, coil bobbins, condenser, variable condenser cases, optical pickups, oscillators, various terminal plates, transformers, plugs, printed boards, tuners, speakers, microphones, headphones, compact motors, magnetic head bases, power modules, terminal blocks, semiconductors, liquid crystals, FDD carriages, FDD chassis, motor blush holders, parabolic antennas, and computer-related members; members for home electronics and office electronics typified by VTR members, television members, clothes irons, hair driers, rice cooker members, microwave oven members, acoustic members, voice/video equipment members such as audio, LaserDisc, compact discs, DVD discs, and Blu-ray Disc, illumination members, refrigerator members, air-conditioner members, typewriter members, word processor members, or water-related equipment members such as water heaters, and sensors for the amount or temperature of water in a bath; machine-related members typified by office computer-related members, telephone equipment-related members, facsimile machine-related members, copy machine-related members, cleaning jigs, motor members, writers, typewriters; optical equipment and precision instrument-related members typified by microscopes, binoculars, cameras, and clocks; and automotive and vehicle-related members such as alternator terminals, alternator connectors, brush holders, slip rings, IC regulators, potentiometer bases for light dimmers, relay blocks, inhibitor switches, various valves such as exhaust gas valves, various fuel-related, exhaust system, and intake system pipes, air intake nozzle snorkels, intake manifolds, fuel pumps, engine coolant water joints, carburetor main bodies, carburetor spacers, exhaust gas sensors, coolant water sensors, oil temperature sensors, brake pad wear sensors, throttle position sensors, crankshaft position sensors, air flow meters, brake pad wear sensors, air conditioner thermostat bases, air heating warm air flow control valves, radiator motor brush holders, water pump impellers, turbine vanes, wiper motor-related members, distributors, starter switches, ignition coils and their bobbins, motor insulators, motor rotors, motor cores, starter relays, transmission wires harnesses, windshield washer nozzles, air conditioner panel switch boards, coils for fuel-related electromagnetic valves, connectors for fuses, horn terminals, electrical component insulation plates, step motor rotors, lamp sockets, lamp reflectors, lamp housings, brake pistons, solenoid bobbins, engine oil filters, and ignition device cases. The molded article and the composite molded article according to the present embodiment are also applicable for other various applications.

The embodiment of the present invention has been described above, but the present invention is not limited to the above embodiment. The present embodiment can be modified in various ways without departing from the spirit thereof, and the various modifications are also included in the technical scope of the present invention.

Examples

Hereinbelow, the present invention will be described in more detail with examples, but the present invention is not limited to the following examples at all. Incidentally, in the following description, "%" and "part" are on a mass basis unless otherwise described.

Examples 1 to 18 and Comparative Examples 1 and 2

Each material was blended according to the compositional components and the blending amounts shown in Table 1 and Table 2. Thereafter, these blended materials were put into twin screw extruder with a vent "TEX-30 (product name)" manufactured by The Japan Steel Works, Ltd., followed by melting and kneading at a resin component discharging amount of 25 kg/hr, a screw rotational speed of 200 rpm, and a set resin temperature of 320°C to obtain a resin composition pellet. At this time, glass fibers were put into the extruder from a side feeder, and other materials were uniformly mixed in a tumbling barrel in advance and put into the extruder from a top feeder. The obtained resin composition pellet was dried for two hours in a Geer type oven at 140°C, followed by injection molding to prepare each test piece, and the following evaluations were conducted.

Evaluation

(1) Tensile strength measurement

An ISO TYPE-A dumbbell piece was prepared as a test piece, and tensile strength (MPa) was then measured using "AGS-J" manufactured by SHIMADZU CORPORATION in accordance with ISO 527-1 and 2. Incidentally, a dumbbell piece prepared by injecting a resin from one-point gate such that a test piece including no welded part was obtained was used. Measurement results are shown in Table 1 and Table 2.

(2) Isothermal crystallization time measurement

A thin piece (200 μm × 200 μm × 5 μm) was cut out from a heat-pressed sheet of a PPS resin composition as a test piece. Thereafter, before measurement, the test piece was heated from 30°C to 330°C at 3°C/second, held at 330°C for one second, and subsequently cooled to 30°C at 3°C/second, as a pretreatment step, so as to facilitate contact between the test piece and a sensor. Thereafter, as a measurement step, the test piece was heated from 30°C to 330°C at 100°C/second, held at 330°C for one second, subsequently cooled to 140°C at 6000°C/second, and isothermally held, and the time until an exothermic peak derived from crystallization of resin appeared (peak top time) was measured at that time. Incidentally, "Flash DSC1" manufactured by METTLER TOLEDO was used for the measurement of the peak top time. The measured isothermal crystallization times are shown in Table 1 and Table 2.

(3) Evaluation on resistance to heat and humidity

An ISO TYPE-A dumbbell piece was prepared by injection molding as a test piece, and the test piece was then left under a hot and humid condition where the temperature was 121°C and the humidity was 100% for 500 hours. Thereafter, the test piece was gradually cooled to room temperature, the tensile strength (MPa) was then measured in the method according to ISO 527-1 and 2, and the strength change rate (tensile strength after being left under hot and humid condition/tensile strength before being left under hot and humid condition × 100 (%)) with respect to a test piece not exposed under the hot and humid condition was calculated. The calculated strength retention rates in terms of resistance to heat and humidity are shown in Table 1 and Table 2.

(4) Evaluation on moldability (releasability)

The resin composition of each of Examples and Comparative Examples was injection molded using a one-point gate die for molding an ISO TYPE-A dumbbell piece, and moldability (releasability) at that time was evaluated. Incidentally, the cylinder temperature of the injection molding machine was set to 310°C and the die temperature was set to 140°C.

In the evaluation, a pellet of the resin composition was injected into the die, held for 15 seconds or longer, and solidified, and whether the dumbbell piece stuck to the die when the die was opened was then checked. Injection molding was conducted 20 times, and evaluation was made according to the following criteria. Evaluation results are shown in Table 1 and Table 2.

A: Dumbbell pieces do not stick to the die, and molding can be continuously conducted.
B: Dumbbell pieces stick to the die 1 to 10 times, and molding cannot be continuously conducted.
C: Dumbbell pieces stick to the die 10 to 20 times, and molding can be continuously conducted.

(5) Thermal shock resistance (heat cycle characteristics) test on molded article having welded part

A steel insert block member with a longitudinal length of 25 mm, a transverse length of 40 mm, and a thickness of 10 mm was prepared, in which the centers of the diameters of two through-holes each having a diameter of 3.55 mm and being parallel to the thickness direction are located on a straight line which was parallel to the sides of the member in the transverse direction and was obtained by connecting the midpoints of the sides of the member in the longitudinal direction; and the through-holes were disposed such that the distance between the centers of the diameters of the through-holes was 20 mm, with the midpoint of the straight line was positioned at the center of the distance. Thereafter, using the two through-holes and two steel columnar pins disposed inside an injection molding die, the insert block member is placed such that the insert block member was held inside the injection molding die, and the PPS resin composition pellet of each of Examples and Comparative Examples was injection molded using the injection molding die designed such that when a resin composition pellet is injection molded, the whole outer perimeter of the insert block member is covered with a resin composition with a thickness of 1 mm to form a welded part, and a molded article for a thermal shock resistance (heat cycle characteristics) test was obtained thereby. Thermal shock tests were conducted, using the obtained test molded article, in a vapor-phase thermal shock resistance tester, with retention at -40°C for 30 minutes to retention at 150°C for 30 minutes taken as one cycle, and the number cycles until cracking occurred to cause breakage was measured. Incidentally, the test was conducted five times (number of test times n = 5) for each of Examples and Comparative Examples, and the average value thereof was calculated. The calculated average numbers of the cycle numbers until breakage of the respective samples are shown in Table 1 and Table 2.

[Table 1]

| | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Component composition | PPS resin A1 *1 | Parts by mass | 100 | - | 100 | 50 | 50 | 50 | 50 | 50 | 50 | 50 |
| | PPS resin A2 *2 | Parts by mass | - | 100 | - | 50 | 50 | 50 | 50 | 50 | 50 | 50 |
| | Glass fibers B1 *3 | Parts by mass | 44.2 | 44.2 | 44.2 | 44.2 | 44.2 | 44.2 | - | 47.7 | 47.7 | 84.0 |
| | Glass fibers B2 *4 | Parts by mass | - | - | - | - | - | - | - | - | - | - |
| | Glass fibers B3 *5 | Parts by mass | - | - | - | - | - | - | - | - | - | - |
| | Glass fibers B4 *6 | Parts by mass | - | - | - | - | - | - | 44.2 | - | - | - |
| | Silane coupling agent C1 *7 | Parts by mass | 0.7 | 0.7 | - | 0.7 | 0.3 | 1.4 | 0.7 | 0.7 | 0.8 | 1.0 |
| | Silane coupling agent C2 *8 | Parts by mass | - | - | 0.7 | - | - | - | - | - | - | - |
| | Inorganic filler *9 | Parts by mass | - | - | - | - | - | - | - | - | - | 24.2 |
| | Elastomer *10 | Parts by mass | - | - | - | - | - | - | - | 0.8 | 15 | - |

(continued)

| | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Evaluation | Tensile strength | MPa | 170 | 180 | 150 | 170 | 150 | 180 | 160 | 160 | 140 | 130 |
| | Isothermal crystallization time | Second | 7 | 8 | 5 | 5 | 4 | 9 | 5 | 5 | 9 | 3 |
| | Heat and humidity resistance strength retention rate | % | 85 | 85 | 80 | 91 | 85 | 93 | 85 | 91 | 88 | 88 |
| | Moldability (releasability) | | A | A | A | A | A | B | A | A | A | A |
| | Thermal shock resistance | Cycle number | 25 | 10 | 25 | 20 | 15 | 25 | 15 | 50 | 700 | 3 |

[Table 2]

| | | Unit | Example 11 | Example 12 | Example 13 | Example 14 | Example 15 | Example 16 | Example 17 | Example 18 | Comparative Example 1 | Comparative Example 2 |
|---|---|---|---|---|---|---|---|---|---|---|---|---|
| Component composition | PPS resin A1 *1 | Parts by mass | 50 | 50 | 25 | 50 | 75 | 25 | 75 | 17 | 50 | 50 |
| | PPS resin A2 *2 | Parts by mass | 50 | 50 | 75 | 50 | 25 | 75 | 25 | 83 | 50 | 50 |
| | Glass fibers B1 *3 | Parts by mass | 112.0 | 76.3 | 47.7 | 47.7 | 47.7 | 76.3 | 76.3 | 47.7 | - | - |
| | Glass fibers B2 *4 | Parts by mass | - | - | - | - | - | - | - | - | 44.2- | - |
| | Glass fibers B3 *5 | Parts by mass | - | - | - | - | - | - | - | - | - | 44.2 |
| | Glass fibers B4 *6 | Parts by mass | - | - | - | - | - | - | - | - | - | - |
| | Silane coupling agent C1 *7 | Parts by mass | 1.0 | 1.1 | 0.8 | 0.8 | 0.8 | 1.1 | 1.1 | 0.8 | 0.7 | 0.7 |
| | Silane coupling agent C2 *8 | Parts by mass | - | - | - | - | - | - | - | - | - | - |
| | Inorganic filler *9 | Parts by mass | 63.1 | 29.6 | - | - | - | 29.6 | 29.6 | - | - | - |
| | Elastomer *10 | Parts by mass | - | 10.9 | 7.8 | 7.8 | 7.8 | 10.9 | 10.9 | - | - | - |

(continued)

| | | Unit | Example 11 | Example 12 | Example 13 | Example 14 | Example 15 | Example 16 | Example 17 | Example 18 | Comparative Example 1 | Comparative Example 2 |
|---|---|---|---|---|---|---|---|---|---|---|---|---|
| Evaluation | Tensile strength | MPa | 120 | 165 | 165 | 160 | 160 | 180 | 175 | 160 | 160 | 160 |
| | Isothermal crystallization time | Second | 2 | 4 | 5 | 5 | 5 | 4 | 4 | 9 | 13 | 11 |
| | Heat and humidity resistance strength retention rate | % | 85 | 87 | 89 | 91 | 91 | 87 | 89 | 85 | 90 | 72 |
| | Moldability (releasability) | | A | A | A | A | A | A | A | A | C | C |
| | Thermal shock resistance | Cycle number | 1 | 140 | 400 | 500 | 600 | 130 | 150 | 15 | 20 | 20 |

* 1 Polyphenylene sulfide resin (linear chain type), manufactured by DIC Corporation, melt viscosity at 300°C (V6): 60 Pa s
*2 Polyphenylene sulfide resin (cross-linked type), manufactured by DIC Corporation, melt viscosity at 300°C (V6): 60 Pa s
*3 Surface treated glass fibers, sizing agent: containing 95% of epoxy resin and 5% of polyether resin, glass fibers: chopped strands with a fiber diameter of 10 μm, and a fiber length of 3 mm
*4 Surface treated glass fibers, sizing agent: containing 50% of epoxy resin, 0% of polyether resin, and 50% of urethane resin, glass fibers: chopped strands with a fiber diameter of 10 μm, and a fiber length of 3 mm
*5 Surface treated glass fibers, sizing agent: containing 55% of epoxy resin, 3% of polyether resin, and 42% of other components, glass fibers: chopped strands with a fiber diameter of 10 μm, and a fiber length of 3 mm
*6 Surface treated glass fibers, sizing agent: containing 60% of epoxy resin, 5% of polyether resin, and 35% of other components, glass fibers: chopped strands with a fiber diameter of 10 μm, and a fiber length of 3 mm
*7 3-Aminopropyltriethoxysilane
*8 γ-Glycidoxypropyltrimethoxysilane
*9 Calcium carbonate, average particle diameter ($D_{50}$): 22 μm
*10 Elastomer, manufactured by SUMITOMO CHEMICAL COMPANY, LIMITED, BONDFAST 7L

From Table 1 and Table 2, it has been found that the samples using the respective PAS resin compositions of Examples exhibited high numerical values in all evaluation items compared with the samples using the respective PAS resin compositions of Comparative Examples, and provided excellent effects in a balanced way.

INDUSTRIAL APPLICABILITY

According to the present invention, a PAS resin composition having excellent resistance to heat and humidity and moldability without deteriorating physical properties such as mechanical strength and a PAS resin composition production method can be provided.

In addition, according to the present invention, a molded article having excellent resistance to heat and humidity and moldability without deteriorating physical properties such as mechanical strength and a molded article production method can be provided.

## Claims

**1.** A polyarylene sulfide resin composition comprising:

a polyarylene sulfide resin;
glass fibers having been subjected to surface treatment with a sizing agent including an epoxy resin and a polyether resin; and
a silane coupling agent having a functional group, wherein
the sizing agent has a content of the epoxy resin and the polyether resin of 65% to 100% by mass in total, and
the polyarylene sulfide resin composition has an isothermal crystallization time of 9 seconds or shorter.

**2.** The polyarylene sulfide resin composition according to claim 1, the resin composition comprising 10 to 150 parts by mass of the glass fibers having been subjected to surface treatment, and 0.3 to 10 parts by mass of the silane coupling agent based on 100 parts by mass of the polyarylene sulfide resin.

**3.** The polyarylene sulfide resin composition according to claim 1 or 2, wherein
the sizing agent contains 55% to 98% by mass of the epoxy resin and 2% to 35% by mass of the polyether resin.

**4.** The polyarylene sulfide resin composition according to any one of claims 1 to 3, further comprising an elastomer.

**5.** The polyarylene sulfide resin composition according to any one of claims 1 to 4, further comprising calcium carbonate.

**6.** A polyarylene sulfide resin composition production method, comprising:

blending a polyarylene sulfide resin, glass fibers having been subjected to surface treatment with a sizing agent, and a silane coupling agent having a functional group; and melting and kneading the same, wherein
the sizing agent includes an epoxy resin and a polyether resin,
the sizing agent has a content of the epoxy resin and the polyether resin of 65% to 100% by mass in total, and
a resin composition obtained has an isothermal crystallization temperature of 9 seconds or shorter.

**7.** The polyarylene sulfide resin composition production method according to claim 6, blending 10 to 150 parts by mass of the glass fibers having been subjected to surface treatment and 0.3 to 10 parts by mass of the silane coupling agent, based on 100 parts by mass of the polyarylene sulfide resin.

**8.** The polyarylene sulfide resin composition production method according to claim 6 or 7, wherein
the sizing agent contains 55% to 98% by mass of the epoxy resin and 2% to 35% by mass of the polyether resin.

**9.** The polyarylene sulfide resin composition production method according to any one of claims 6 to 8, further blending an elastomer.

**10.** The polyarylene sulfide resin composition production method according to any one of claims 6 to 9, further blending calcium carbonate.

**11.** A molded article obtained by molding the polyarylene sulfide resin composition according to any one of claims 1 to 5.

**12.** A molded article production method, comprising melting and molding a resin composition obtained by the polyarylene sulfide resin composition production method according to any one of claims 6 to 10.

## INTERNATIONAL SEARCH REPORT

International application No.
**PCT/JP2021/046422**

**A. CLASSIFICATION OF SUBJECT MATTER**

***C08L 81/02***(2006.01)i; ***C08K 3/26***(2006.01)i; ***C08K 5/5415***(2006.01)i; ***C08K 7/14***(2006.01)i; ***C08K 9/04***(2006.01)i; ***C08L 23/00***(2006.01)i
FI: C08L81/02; C08K7/14; C08K9/04; C08K3/26; C08L23/00; C08K5/5415

According to International Patent Classification (IPC) or to both national classification and IPC

**B. FIELDS SEARCHED**

Minimum documentation searched (classification system followed by classification symbols)

C08L81/02; C08K3/26; C08K5/5415; C08K7/14; C08K9/04; C08L23/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/009234 A1 (DIC CORPORATION) 10 January 2019 (2019-01-10) | 1-12 |
| A | WO 2020/246459 A1 (DIC CORPORATION) 10 December 2020 (2020-12-10) | 1-12 |
| A | JP 2016-132710 A (TOSOH CORP) 25 July 2016 (2016-07-25) | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 February 2022** | **15 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/046422**

| Patent document cited in search report | Publication date (day/month/year) | Patent family member(s) | Publication date (day/month/year) |
|---|---|---|---|
| WO 2019/009234 A1 | 10 January 2019 | US 2020/0115552 A1 | |
| | | EP 3650501 A1 | |
| | | CN 110832032 A | |
| | | KR 10-2020-0026193 A | |
| WO 2020/246459 A1 | 10 December 2020 | (Family: none) | |
| JP 2016-132710 A | 25 July 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016132710 A
- JP H07228699 A
- WO 2010058713 A